# EUROPEAN PATENT APPLICATION

(11) **EP 4 524 705 A1**
(43) Date of publication of application: **19.03.2025**
(21) Application number: 23893825.2
(22) Date of filing: 21.11.2023
(51) Int. Cl.: G06F 3/0484

(54) **METHOD AND APPARATUS FOR GUIDING USER INTERACTION, AND ELECTRONIC DEVICE**

(30) Priority: 22.11.2022 CN 202211488234
(71) Applicant: Beijing Zitiao Network Technology Co., Ltd., Beijing 100190 (CN)
(72) Inventor: HE, Siqi, Beijing 100028 (CN); BAI, Xiaoshuang, Beijing 100028 (CN)
(74) Representative: Williams, Michael David
(86) International application number: PCT/CN2023/132909
(87) International publication number: WO 2024/109735

(57) **Abstract**

The embodiments of the present disclosure relate to a method and apparatus for guiding user interaction, and an electronic device. The method comprises: displaying, on a first display interface, second content of a first status published by at least one second user, and also a first preset control associated with the second content of the first status; in response to a trigger operation directed at the first preset control associated with target second content, displaying a second display interface; in response to a publishing confirmation operation with regard to the first content, the target second content of the first status switching to target second content of a second status; displaying on a third display interface the target second content of the second status; and displaying a second preset control at a position associated with target media content of the target second content, the second preset control being used for guiding interaction between a first user and a second user.

## Description

### CROSS-REFERENCE TO RELATED APPLICATIONS

The present application is based on and claims priority to Chinese Patent Application No. 202211488234.6 filed on November 22, 2022, the disclosure of which is incorporated by reference herein in its entirety.

### TECHNICAL FIELD

Embodiments of the present disclosure relate to the technical field of computers, and in particular to a method and apparatus for guiding user interaction, and an electronic device.

### BACKGROUND

With the popularity of video application software, more and more users began to use video application software to record their own life. How to facilitate user interaction has become an urgent problem.

### SUMMARY

The present disclosure provides a method and apparatus for guiding user interaction, and an electronic device, so as to solve part or all of the technical problems in related technologies.

According to a first aspect, the present disclosure provides a method for guiding user interaction, comprising: on a first user side,
displaying, on a first display interface, a second content in a first state posted by at least one second user and a first preset control associated with the second content in the first state, wherein the second content in the first state comprises a blurred image of the second content;
in response to a trigger operation for the first preset control associated with a target second content, displaying a second display interface for completing a generation operation of a first content, wherein the target second content is a second content posted by a target second user among the at least one second user;
in response to a post confirmation operation for the first content, switching the target second content in the first state to a target second content in a second state which comprises a target media content corresponding to the target second content, wherein the target media content is the target second content without blur processing;
displaying the target second content in the second state on a third display interface;
displaying a second preset control at an associated position of the target media content of the target second content, wherein the second preset control is configured for guiding the first user to interact with the second user.

According to the method provided by an embodiment of the present disclosure, a second content in a first state posted by at least one second user is displayed on a first display interface, and the content appears in a blur form, which can attract the attention of users. A first preset control associated with the second content in the first state is displayed on the first display interface. In response to a trigger for the first preset control associated with a target second content, a second display interface is displayed to guide users to actively generate their own content. Meanwhile, after responding to a post confirmation operation for the first content, the target second content in the first state will also be switched to a target second content in a second state and displayed on a third display interface. The second preset control is displayed at an associated position of the target second content in the second state (target media content) displayed on the third display interface, that is, after the first user triggers the shooting-to-unlock control on a second work of the target second user to unlock, the first user is further guided to interact with the second user with the second work being in a clear state, and the interaction efficiency between users is improved.

Optionally, before the displaying a second preset control at an associated position of the target media content, the method comprises:
determining a relationship type between the first user and the target second user;
determining the second preset control associated with the relationship type according to the relationship type.

Optionally, the second preset control comprises one or more of: a follow control, a comment control, and a message control.

Optionally, the determining the second preset control associated with the relationship type according to the relationship type comprises:
when the relationship type is a first relationship type that the first user does not follow the target second user, determining that the second preset control is the follow control for guiding the first user to follow the target second user; or
when the relationship type is a second relationship type that the first user has followed the target second user but the target second user has not followed the first user, determining that the second preset control is the comment control for guiding the first user to comment on the target second content; or
when the relationship type is a third relationship type that the first user and the second user follow each other, determining that the second preset control is the message control which is used for guiding the first user to message the second user.

Optionally, the method further comprises:
in response to the post confirmation operation for the first content, switching the second contents in the first state other than the target second content from the first state to the second state.

Optionally, the displaying a second content in a first state posted by at least one second user on a first display interface comprises:
displaying interaction information in a first preset area associated with each of the second contents in the first state.

Optionally, the method further comprises: displaying at least one second content in the second state on the third display interface, wherein the at least one second content in the second state comprises the target second content in the second state and the second content in the second state corresponding to at least one other second content.

Optionally, the displaying at least one second content in the second state on the third display interface comprises:
displaying interaction information in a second preset area associated with each of the second contents in the second state displayed on the third display interface.

Optionally, the interaction information comprises like information and/or comment information.

Optionally, when there is an associated user among the at least one second user who has a common friend with the first user, the displaying a second content in a first state posted by at least one second user on a first display interface comprises:
displaying common friend information in a third preset area associated with the second content in the first state posted by the associated user.

Optionally, when there is an associated user who has a common friend with the first user among the at least one second user, the displaying at least one second content in a second state on the third display interface comprises:
displaying the common friend information in a fourth preset area associated with each of the second contents in the second state displayed on the third display interface.

Optionally, the common friend information comprises one or more of: profile picture information of the common friend, account name information of the common friend, and number information of the common friend.

According to a second aspect, the present disclosure provides an apparatus for guiding user interaction, which comprises:
a display module configured for displaying, on a first display interface, a second content in a first state posted by at least one second user and a first preset control associated with the second content in the first state, wherein the second content in the first state comprises a blurred image of the second content;
a processing module configured for responding to a trigger operation for the first preset control associated with a target second content;
wherein, the display module is further configured for displaying a second display interface which is configured for completing a generation operation of a first content, wherein the target second content is a second content posted by a target second user among the at least one second user;
the processing module is further configured for switching, in response to a post confirmation operation for the first content, the target second content in the first state to a target second content in a second state which comprises a target media content corresponding to the target second content, wherein the target media content is the target second content without blur processing;
the display module is further configured for displaying the target second content in the second state on a third display interface; displaying a second preset control at an associated position of the target media content of the target second content, wherein the second preset control is configured for guiding the first user to interact with the second user.

According to the apparatus for guiding user interaction provided by an embodiment of the present disclosure, a second content in a first state posted by at least one second user is displayed on a first display interface, and the content appears in a blur form, which can attract the attention of users. A first preset control associated with the second content in the first state is displayed on the first display interface. After responding to the trigger for the first preset control associated with a target second content, a second display interface is displayed to guide users to actively generate their own content and record every moment of life. Meanwhile, after responding to a post confirmation operation for the first content, the target second content in the first state will also be switched to a target second content in a second state and displayed on a third display interface. The second preset control is displayed at an associated position of the target second content (target media content) in the second state displayed on the third display interface, which can guide the first user to interact with the second user and improve the interaction efficiency between users.

According to a third aspect, there is provided an electronic device, comprising: a processor and a memory;
wherein, the memory stores computer-executed instructions;
the processor executes the computer-executed instructions stored in the memory to cause the processor to execute the method for guiding user interaction according to any embodiment of the first aspect.

According to a fourth aspect, there is provided a computer-readable storage medium storing thereon computer-executed instructions which, when executed by a processor, implement the method for guiding user interaction according to any embodiment of the first aspect.

### BRIEF DESCRIPTION OF THE DRAWINGS

Fig. 1 is a schematic flow diagram of a method for guiding user interaction provided by an embodiment of the present disclosure;
Fig. 2 is a schematic diagram of a blurred image of a second content provided by the present disclosure;
Fig. 3 is a schematic diagram of one of visualizations of a second display interface provided by the present disclosure;
Fig. 4 is a target second content without blur processing corresponding to Fig. 2 provided by the present disclosure;
Fig. 5 is a schematic flow diagram of another method for guiding user interaction provided by an embodiment of the present disclosure;
Fig. 6 is a schematic diagram of interaction information between user A and other user in a first preset area provided by the present disclosure;
Fig. 7 is a schematic diagram of displaying interaction information in a second preset area associated with a certain second content in a second state provided by the present disclosure;
Fig. 8 is a schematic diagram of displaying common friend information on a first display interface provided by an embodiment of the present disclosure;
Fig. 9 is a schematic diagram of displaying common friend information on a third display interface provided by an embodiment of the present disclosure;
Fig. 10 is a schematic structural diagram of an apparatus for guiding user interaction provided by an embodiment of the present disclosure;
Fig. 11 is a schematic structural diagram of an electronic device provided by an embodiment of the present disclosure.

### DETAILED DESCRIPTION

In order to make the objects, technical solutions and advantages of embodiments of the present disclosure more clear, the technical solutions in the embodiments of the present disclosure will be described clearly and completely in combination with the attached drawings. Obviously, the described embodiments are a portion of the embodiments of the present disclosure, but not all the embodiments. Based on the embodiments in the present disclosure, all other embodiments obtained by those skilled in the art without inventive effort belong to the scope of protection in the present disclosure.

It can be understood that before the use of the technical solutions disclosed in various embodiments of the present disclosure, users should be informed of the types, scope of use, use scenarios, etc. of personal information involved in the present disclosure in an appropriate way according to relevant laws and regulations and user authorization should be obtained.

For example, in response to receiving a user's active request, prompt information is sent to the user to clearly remind the user that the operation requested by the user will require acquisition and usage of the user's personal information. Therefore, the user can voluntarily select whether to provide personal information to software or hardware such as electronic devices, applications, servers or storage media that execute operations of the technical solutions of the present disclosure according to the prompt information.

As one optional but non-limiting implementation, in response to receiving the user's active request, the way to send the prompt information to the user can be, for example, a pop-up window, in which the prompt information can be presented in a text way. In addition, the pop-up window can also carry a selection control for the user to select "agree" or "disagree" so as to provide personal information to the electronic device.

It can be understood that the above process of notifying and acquiring user authorization is only schematic, and does not limit the implementation of the present disclosure. Other ways to meet relevant laws and regulations can also be applied to the implementations of the present disclosure.

It can be understood that the data involved in the present technical solution (including but not limited to the data itself, data acquisition or use) shall comply with the requirements of corresponding laws, regulations and relevant regulations.

In order to facilitate the understanding of the embodiments of the present disclosure, specific embodiments will be further explained in combination with the attached drawings, and the embodiments do not constitute limitations to the embodiments of the present disclosure.

Aiming at the technical problems mentioned in the background art, the embodiments of the present disclosure provide a method and apparatus for guiding user interaction, and an electronic device method.

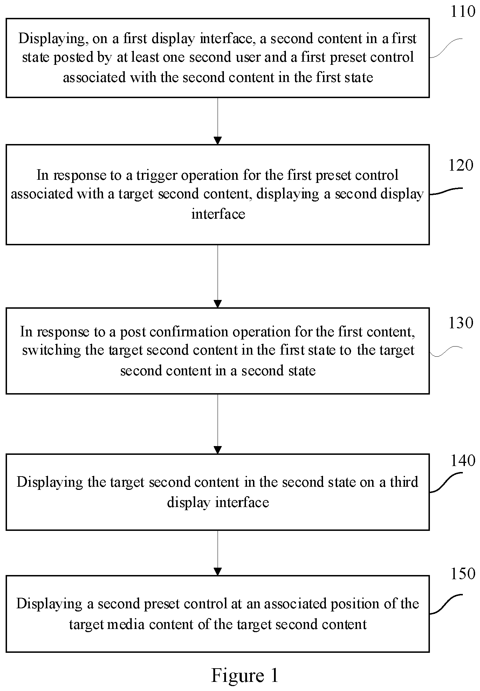

Specific method steps for guiding user interaction will be described in detail below, and reference can be made to Fig. 1 provided by an embodiment of the present disclosure. Fig. 1 is a schematic flow diagram of a method for guiding user interaction provided by an embodiment of the present disclosure. The method is applied to a first user side, and the method steps comprise:
Step 110, displaying, on a first display interface, a second content in a first state posted by at least one second user and a first preset control associated with the second content in the first state.

Specifically, the second content in the first state comprises a blurred image of the second content.

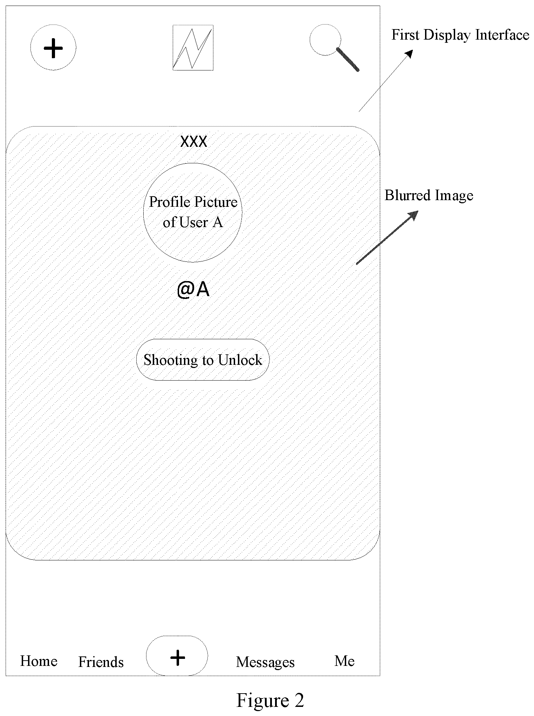

Specifically, referring to Fig. 2, Fig. 2 illustrates the second content in the first state. As can be seen in Fig. 2, Fig. 2 illustrates a blurred image of the second content. The poster of the second content is a certain second user, for example, user A illustrated in Fig. 2. The first preset control associated with the second content in the first state can be, for example, the "unlock after shooting" control shown in Fig. 2. When the user is interested in the current second work, the user can be guided by this control to shoot and upload the work to unlock the blurred image and see the second content in the second state.

Step 120, in response to a trigger operation for the first preset control associated with a target second content, displaying a second display interface.

Specifically, the target second content is a second content posted by a target second user among the at least one second user. The second display interface is used for completing a generation operation of a first content.

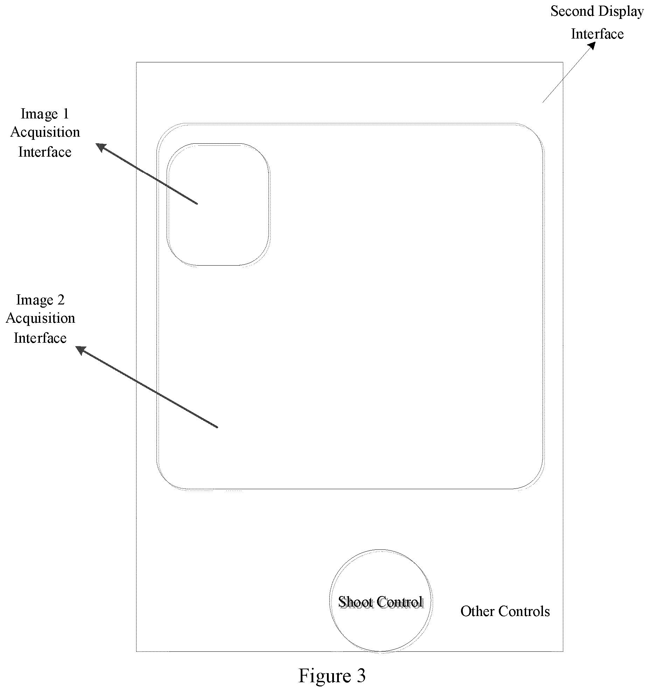

After the first user triggers the first preset control associated with the target second content, the system end will display the second display interface in response to the trigger operation for the first preset control associated with the target second content, for example, in response to the trigger operation of "unlocking after shooting". On the second display interface, the first user will be guided to complete the generation operation of his own work, wherein the generation operation includes but it not limited to shooting and/or uploading and other operations. Referring specifically to Fig. 3, Fig. 3 illustrates a schematic diagram of one of visualizations of a second display interface. The image 1 acquisition interface illustrated in Fig. 3 can be used to acquire, for example, a user's selfie, and the image 2 acquisition interface can be used to acquire other image information. Through the shoot control, image 1 and image 2 can be simultaneously acquired. Certainly, other controls can also be included, such as a control for switching and adjusting the front and rear cameras. Fig. 3 includes an image acquisition interface that can realize acquisition of at least two images. However, in practical applications, only one acquisition interface can also be included, which is simply used to acquire the user's selfie image or other images, and the acquisition process can refer to implementations of forward shooting (selfie) and reverse shooting (shooting ways other than selfie) of the current shooting device, or the like.

Step 130, in response to a post confirmation operation for the first content, switching the target second content in the first state to a target second content in a second state.

Step 140, displaying the target second content in the second state on a third display interface.

Specifically, after completing the generation operation of the first content according to the above operation, the user can click Post to Confirm. After the system responds to the post confirmation operation for the first content, the second content will be switched from the first state to the second state. Illustratively, the first state is a state in which the second content is presented in a blurred image, and the second state is a state in which the second content is presented in a clear image. The target second content in the second state includes the target media content corresponding to the target second content, and the target media content is the target second content without blur processing. That is, the blurred image of the target second content is switched to an image after non-blur processing.

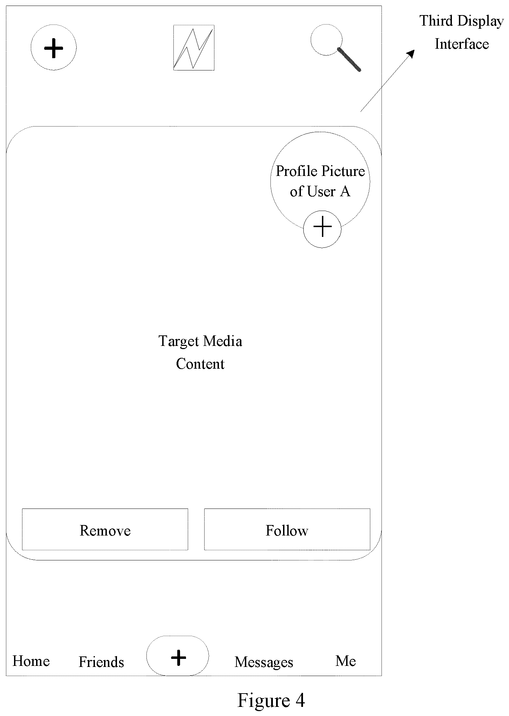

A schematic diagram of the target second content in the second state can refer to Fig. 4. Fig. 4 illustrates the target second content without blur processing corresponding to Fig. 2.

In one optional example, the third display interface can be the first display interface or other display interface. For example, the first display interface is a recommendation page. The third display interface can be a play page associated with a friend page, a follow page or a personal page.

Step 150, displaying a second preset control at an associated position of the target media content of the target second content.

Specifically, the second preset control is used for guiding the first user to interact with the second user. That is, the second preset control is a control for guiding the first user and the second user to interact with each other, including but not limited to a preset control with the functions of following, sending messages, making comments, etc.

In one specific example, please refer to Fig. 4, which illustrates one specific implementation of the second preset control, namely the follow control. Through the second preset control illustrated in Fig. 4, the interaction between the first user and the second user can be further guided.

According to the method for guiding user interaction provided by the embodiment of the present disclosure, a second content in a first state posted by at least one second user is displayed on a first display interface, and the content appears in a blur form, which can attract the attention of users. A first preset control associated with the second content in the first state is displayed on the first display interface. In response to the trigger for the first preset control associated with a target second content, a second display interface is displayed to guide users to actively generate their own content. Meanwhile, in response to a post confirmation operation for the first content, the target second content in the first state will also be switched to the target second content in a second state and displayed on a third display interface. The second preset control is displayed at an associated position of the target second content in the second state (target media content) displayed on the third display interface, that is, after the first user triggers the shooting-to-unlock control on a second work of the target second user to unlock, the first user is further guided to interact with the second user with the second work being in a clear state, and the interaction efficiency between users is improved.

Optionally, on the basis of the above embodiment, it is considered that the relationship type between the first user and the target second user is different. For example, it is possible that the first user does not follow the target second user; it is also possible that the first user has followed the target second user but the target second user has not followed the first user; furthermore, it is also possible that the first user and the target second user are in a relationship of following each other. For a different relationship between the first user and the target second user, a different type of second preset control can be presented.

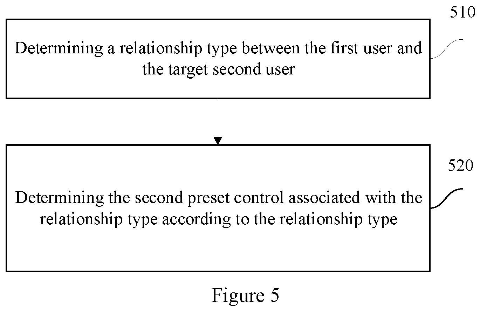

Therefore, on the basis of the above embodiment, the method can further include the following method steps, as specifically shown in Fig. 5, which include:
Step 510, determining a relationship type between the first user and the target second user.
Step 520, determining the second preset control associated with the relationship type according to the relationship type.

Specifically, the relationship type between the first user and the second user can be realized by mature technologies, and further details are omitted here.

As introduced above, a second preset control matching the relationship type can be searched from a relationship mapping table, which is for example pre-constructed, according to the relationship type. Certainly, the second preset control associated with the relationship type can also be obtained in other ways, for example, it is directly configured by a pre-configuration means to select certain second preset control when it is determined that the first user and the target second user are in a corresponding relationship type. For the specific means, no further limitations are made.

Optionally, in the present embodiment, the second preset control includes but is not limited to one or more of: a follow control, a comment control, and a message control.

The determining the second preset control associated with the relationship type according to the relationship type can specifically refer to the following situations.

Firstly, when the relationship type is a first relationship type that the first user does not follow the target second user, determining that the second preset control is the follow control which is used for guiding the first user to follow the target second user;
or
secondly, when the relationship type is a second relationship type that the first user has followed the target second user but the target second user has not followed the first user, determining that the second preset control is the comment control which is used for guiding the first user to comment on the target second content;
   or,
thirdly, when the relationship type is a third relationship type that the first user and the second user follow each other, determining that the second preset control is the message control which is used for guiding the first user to message the second user.

Specifically, when the relationship type is the first relationship type, it can be determined that the second preset control is a follow control similar to that shown in Fig. 4, which is used for guiding the first user to follow the target second user.

Or,
when the relationship type is the second relationship type, it can be determined that the second preset control is a comment control, where the first user can comment on the target media content posted by the target second user.

Or, when the relationship type is the third relationship type, it can be determined that the second preset control is a message control, and the first user can send message content to the target second user through the message control.

Optionally, it is mentioned above that the target second content in the first state is switched to the target second content in the second state in response to the post confirmation operation for the first content. In fact, the first user can not only view the target second content in the second state, but also view other second content in the state without blur processing. Therefore, the method further includes:
in response to the post confirmation operation for the first content, switching the second contents in the first state other than the target second content from the first state to the second state.

The other second content, similar to the target second content mentioned above, is also switched to the second state after the first user unlocks by shooting. Illustratively, the second state of other second content in the present disclosure is also the state without blur processing.

Further optionally, in order to increase the interaction with the second user after attracting the first user to upload his own content in a way like "shooting to unlock", the displaying a second content in a first state posted by at least one second user on a first display interface comprises: displaying interaction information in a first preset area associated with each of the second contents in the first state.

Specifically, when the second content is in the first state, one piece of interaction information between the second user, to which the second content belongs, and other user is displayed in the first preset area associated with the second content.

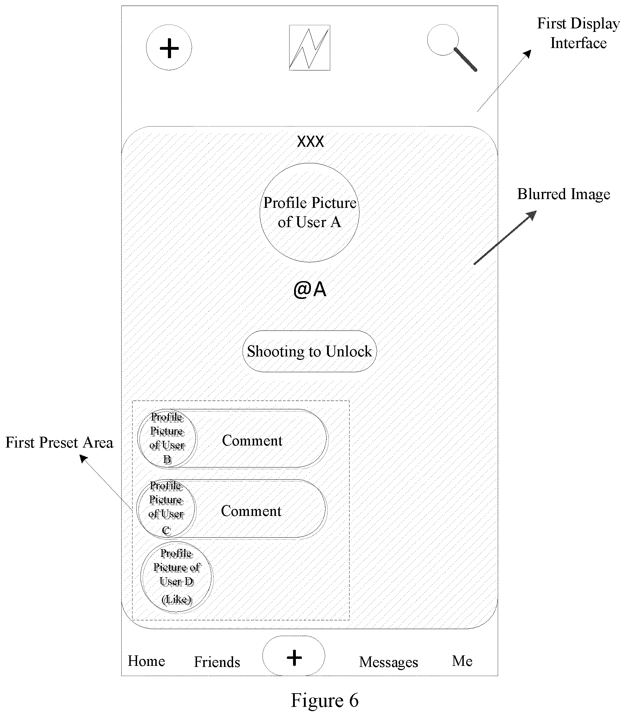

For example, as shown in Fig. 6, the interaction information between user A and other user is illustrated in Fig. 6. In one specific example, the interaction information includes but is not limited to like information and/or comment information.

Optionally, the range of the first preset area can be a certain area in the blurred image, or an area outside the blurred image, such as the bottom or top of the first display interface, or the comment panel displayed by clicking a certain position, etc., and the specific situation is not limited here.

Further optionally, in addition to the target second content in the second state, other second content in the second state can also be displayed on the third display interface. Certainly, whether other second content in the second state is displayed on the third display interface can be set according to the actual situation, and is not necessarily displayed. Therefore, the method further comprises:
displaying at least one second content in the second state on the third display interface, wherein the at least one second content in the second state must comprise the target second content in the second state and can comprise the second content in the second state corresponding to the at least one other second content.

Optionally, similar to the above reason, in order to increase the interaction with the second user after attracting the first user to upload his own content in a way like "shooting to unlock", the displaying at least one second content in the second state on the third display interface comprises: displaying interaction information in a second preset area associated with each of the second contents in the second state displayed on the third display interface.

As mentioned above, the interaction information includes but is not limited to like information and/or comment information.

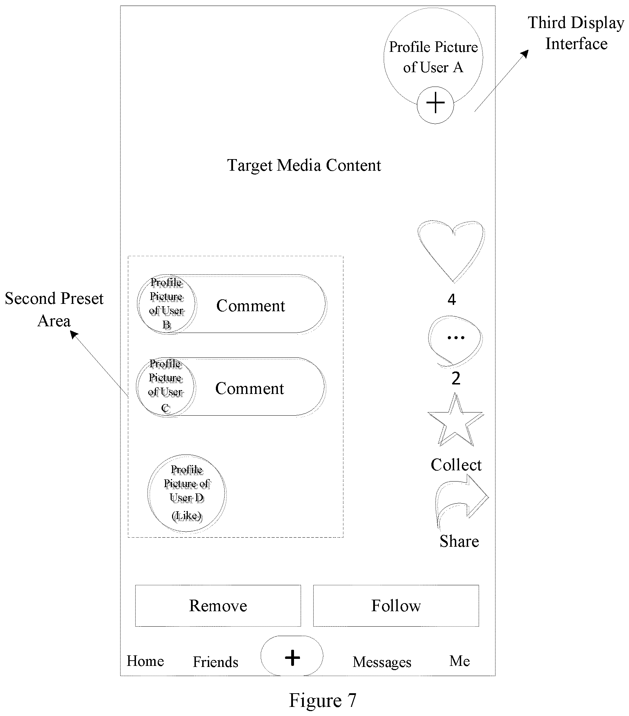

Referring specifically to Fig. 7, it illustrates displaying interaction information in a second preset area associated with a certain second content in a second state. For a similar reason, the range of the second preset area can be a certain area of the media content displayed after non-blur processing, or an area outside the daily content, such as the bottom or top of the third display interface, or the comment panel displayed by clicking a certain position, etc.

Further optionally, when there is an associated user among the at least one second user who has a common friend with the first user, the displaying a second content in a first state posted by at least one second user on a first display interface comprises: displaying common friend information in a third preset area associated with the second content in the first state posted by the associated user.

Optionally, when there is an associated user among the at least one second user who has a common friend with the first user, the following can also be included:
the displaying at least one second content in a second state on the third display interface comprises: displaying the common friend information in a fourth preset area associated with each of the second contents in the second state displayed on the third display interface.

Similar to the above situation, in addition to the comment information, common friend information can also be displayed to attract the attention of the first user and increase the possibility of interaction between the first user and the second user.

However, the definitions of the third preset area and the fourth preset area are similar to those of the first preset area and the second preset area, and will not be explained here.

In one specific example, the common friend information includes, but is not limited to, one or more of: profile picture information of the common friend, account name information of the common friend, and number information of the common friend.

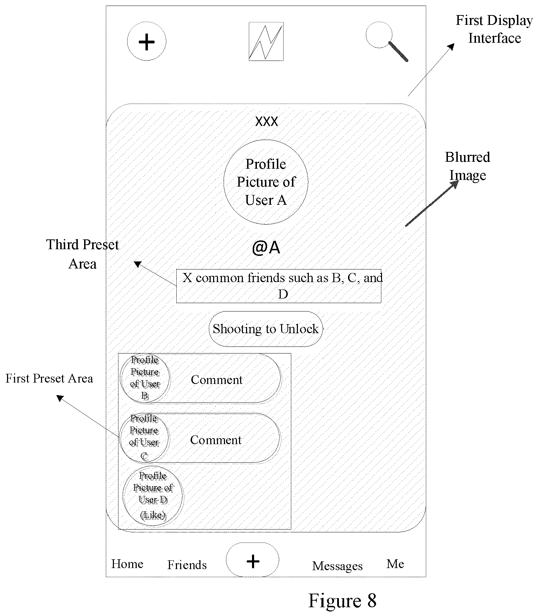

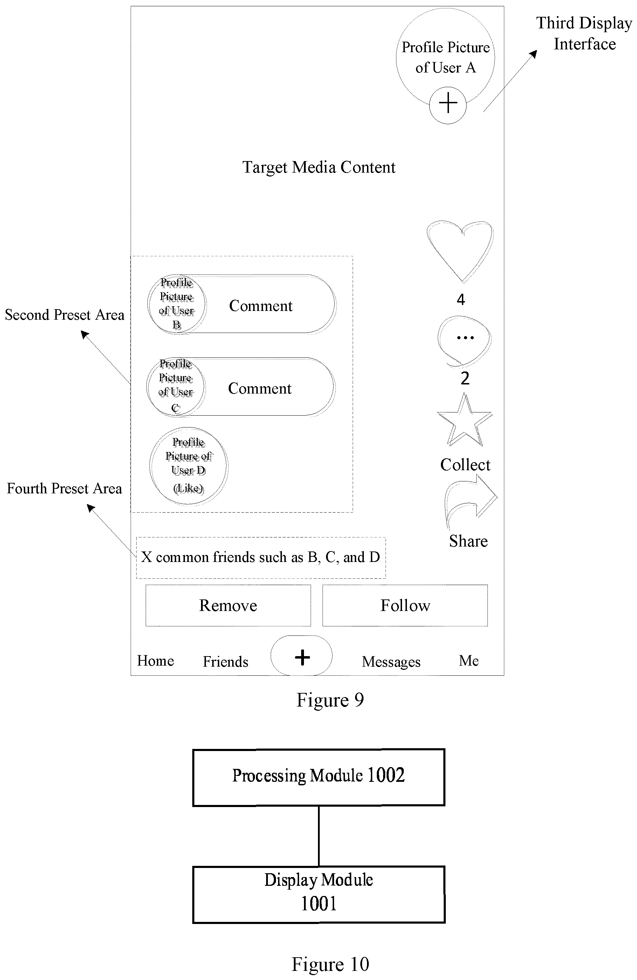

As for the schematic diagrams for presenting the common friend information, for example, refer to Fig. 8 and Fig. 9, where Fig. 8 shows the situation of displaying on the first display interface, and Fig. 9 shows the situation of displaying on the third display interface. Fig. 9 does not present all the contents in Fig. 4, and Fig. 9 focuses on the common friend information, and the interaction information between the target second user and other user, and etc.

The above is the corresponding method embodiment for guiding user interaction provided by the present disclosure, and the following is a description of other corresponding embodiments for guiding user interaction provided by the present disclosure, with specific reference to the following.

Fig. 10 is a schematic structural diagram of an apparatus for guiding user interaction provided by an embodiment of the present disclosure, which includes a display module 1001 and a processing module 1002.

The display module 1001 is used for displaying, on a first display interface, a second content in a first state posted by at least one second user and a first preset control associated with the second content in the first state, wherein the second content in the first state comprises a blurred image of the second content;
a processing module 1002 is used for responding to a trigger operation for the first preset control associated with a target second content;
the display module 1001 is further used for displaying a second display interface which is used for completing a generation operation of a first content, wherein the target second content is a second content posted by a target second user among the at least one second user;
the processing module 1002 is further used for switching, in response to a post confirmation operation for the first content, the target second content in the first state to a target second content in a second state which comprises a target media content corresponding to the target second content, wherein the target media content is the target second content without blur processing;
the display module 1001 is further used for displaying the target second content in the second state on a third display interface; displaying a second preset control at an associated position of the target media content of the target second content, wherein the second preset control is used for guiding the first user to interact with the second user.

Optionally, the processing module 1002 is further used for determining a relationship type between the first user and the target second user;
determining the second preset control associated with the relationship type according to the relationship type.

Optionally, the second preset control comprises one or more of: a follow control, a comment control, and a message control.

Optionally, the processing module 1002 is specifically used for determining, when the relationship type is a first relationship type that the first user does not follow the target second user, that the second preset control is the follow control which is used for guiding the first user to follow the target second user; or
when the relationship type is a second relationship type that the first user has followed the target second user but the target second user has not followed the first user, determining that the second preset control is the comment control which is used for guiding the first user to comment on the target second content; or
when the relationship type is a third relationship type that the first user and the second user follow each other, determining that the second preset control is the message control which is used for guiding the first user to message the second user.

Optionally, the processing module 1002 is further used for switching, in response to the post confirmation operation for the first content, the second contents in the first state other than the target second content from the first state to the second state.

Optionally, the display module 1001 is specifically used for displaying interaction information in a first preset area associated with each of the second contents in the first state.

Optionally, the display module 1001 is further used for displaying at least one second content in the second state on the third display interface, wherein the at least one second content in the second state comprises the target second content in the second state and the second content in the second state corresponding to the at least one other second content.

Optionally, the display module 1001 is specifically used for displaying interaction information in a second preset area associated with each of the second contents in the second state displayed on the third display interface.

Optionally, the interaction information comprises like information and/or comment information.

Optionally, when there is an associated user among the at least one second user who has a common friend with the first user, the display module 1001 is specifically used for displaying common friend information in a third preset area associated with the second content in the first state posted by the associated user.

Optionally, when there is an associated user among the at least one second user who has a common friend with the first user, the display module 1001 is specifically used for displaying the common friend information in a fourth preset area associated with each of the second contents in the second state displayed on the third display interface.

Optionally, the common friend information comprises one or more of: profile picture information of the common friend, account name information of the common friend, and number information of the common friend.

The functions executed by the parts in the apparatus for guiding user interaction provided by the embodiment of the present disclosure have been described in detail in any one of the above method embodiments, so they will not be repeated here.

According to the apparatus for guiding user interaction provided by an embodiment of the present disclosure, a second content in a first state posted by at least one second user is displayed on a first display interface, and the content appears in a blurred form, which can attract the attention of users. A first preset control associated with the second content in the first state is displayed on the first display interface. In response to the trigger for the first preset control associated with a target second content, a second display interface is displayed to guide users to actively generate their own content. Meanwhile, in response to a post confirmation operation for the first content, the target second content in the first state will also be switched to a target second content in a second state and displayed on a third display interface. The second preset control is displayed at an associated position of the target second content in the second state (target media content) displayed on the third display interface, that is, after the first user triggers the shooting-to-unlock control on a second work of the target second user to unlock, the first user is further guided to interact with the second user with the second work being in a clear state, and the interaction efficiency between users is improved.

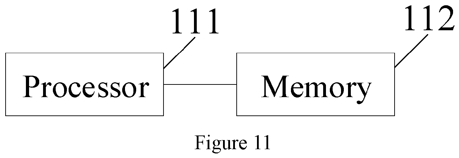

As shown in Fig. 11, an embodiment of the present disclosure provides an electronic device including a processor 111 and a memory 112.

The memory 112 stores computer-executed instructions.

In one embodiment of the present disclosure, the processor 111 is used for executing the computer-executed instructions stored in the memory 112 to cause the processor 111 to execute the method for guiding user interaction provided in any one of the aforementioned method embodiments, and the method comprises:
at a first user side:
displaying, on a first display interface, a second content in a first state posted by at least one second user and a first preset control associated with the second content in the first state, wherein the second content in the first state comprises a blurred image of the second content;
in response to a trigger operation for the first preset control associated with a target second content, displaying a second display interface which is used for completing a generation operation of a first content, wherein the target second content is a second content posted by a target second user among the at least one second user;
in response to a post confirmation operation for the first content, switching the target second content in the first state to a target second content in a second state which comprises a target media content corresponding to the target second content, wherein the target media content is the target second content without blur processing;
displaying the target second content in the second state on a third display interface;
displaying a second preset control at an associated position of the target media content of the target second content, wherein the second preset control is used for guiding the first user to interact with the second user.

Optionally, the second preset control comprises one or more of: a follow control, a comment control, and a message control.

Optionally, before the displaying a second preset control at an associated position of the target media content, the method comprises:
determining a relationship type between the first user and the target second user;
determining the second preset control associated with the relationship type according to the relationship type.

Optionally, the determining the second preset control associated with the relationship type according to the relationship type comprises:
when the relationship type is a first relationship type that the first user does not follow the target second user, determining that the second preset control is the follow control which is used for guiding the first user to follow the target second user; or
when the relationship type is a second relationship type that the first user has followed the target second user but the target second user has not followed the first user, determining that the second preset control is the comment control which is used for guiding the first user to comment on the target second content; or
when the relationship type is a third relationship type that the first user and the second user follow each other, determining that the second preset control is the message control which is used for guiding the first user to message the second user.

Optionally, the method further comprises:
in response to the post confirmation operation for the first content, switching the second contents in the first state other than the target second content from the first state to the second state.

Optionally, the displaying a second content in a first state posted by at least one second user on a first display interface comprises:
displaying interaction information in a first preset area associated with each second content in the first state.

Optionally, the method further comprises: displaying at least one second content in the second state on the third display interface, wherein the at least one second content in the second state comprises the target second content in the second state and the second content in the second state corresponding to the at least one other second content.

Optionally, the displaying at least one second content in the second state on the third display interface comprises:
displaying interaction information in a second preset area associated with each of the second contents in the second state displayed on the third display interface.

Optionally, the interaction information comprises like information and/or comment information.

Optionally, when there is an associated user among the at least one second user who has a common friend with the first user, the displaying a second content in a first state posted by at least one second user on a first display interface comprises:
displaying common friend information in a third preset area associated with the second content in the first state posted by the associated user.

Optionally, when there is an associated user among the at least one second user who has a common friend with the first user, the displaying at least one second content in a second state on the third display interface comprises:
displaying the common friend information in a fourth preset area associated with each second content in the second state displayed on the third display interface.

Optionally, the common friend information comprises one or more of: profile picture information of the common friend, account name information of the common friend, and number information of the common friend.

An embodiment of the present disclosure also provides a computer-readable storage medium storing thereon computer-executed instructions which, when executed by a processor, implement the steps of the method for guiding user interaction provided by any method embodiment.

According to the embodiment of the present disclosure, the process described above with reference to the flow diagram can be implemented as a computer software program. For example, an embodiment of the present disclosure also provides a computer program product, which includes a computer program, and when the processor executes the computer program, the method shown in the flow diagram can be implemented. In such an embodiment, the computer program can be downloaded and installed from the network through a communication means or installed from a storage means. The computer program includes program code for executing the method of the embodiment of the present disclosure.

It should be noted that, relational terms such as "first" and "second" herein are only used to distinguish one entity or operation from another entity or operation, and do not necessarily require or imply that there is any such actual relationship or order between these entities or operations. Moreover, the terms "including", "comprising" or any other variation thereof are intended to cover non-exclusive inclusion, so that a process, method, article or device including a series of elements includes not only those elements, but also other elements not explicitly listed, or elements inherent to such process, method, article or device. Without more restrictions, the element defined by the phrase "including one ... " does not exclude that there are other identical elements in the process, method, article or device including the elements.

The above are only specific implements of the present disclosure, so that those skilled in the art can understand or implement the present disclosure. Many modifications to these embodiments will be obvious to those skilled in the art, and the general principles defined herein can be implemented in other embodiments without departing from the spirit or scope of the present disclosure. Therefore, the present disclosure is not to be limited to these embodiments shown herein, but is to be accorded the widest scope consistent with the principles and novel features applied herein.

## Claims

1. A method for guiding user interaction, which comprises, on a first user side:
displaying, on a first display interface, a second content in a first state posted by at least one second user and a first preset control associated with the second content in the first state, wherein the second content in the first state comprises a blurred image of the second content;
in response to a trigger operation for the first preset control associated with a target second content, displaying a second display interface for completing a generation operation of a first content, wherein the target second content is the second content posted by a target second user among the at least one second user;
in response to a post confirmation operation for the first content, switching the target second content in the first state to a target second content in a second state which comprises a target media content corresponding to the target second content, wherein the target media content is the target second content of without blur processing;
displaying the target second content in the second state on a third display interface;
displaying a second preset control at an associated position of the target media content of the target second content, wherein the second preset control is configured for guiding the first user to interact with the second user.

2. The method according to Claim 1, wherein, before the displaying the second preset control at the associated position of the target media content, the method comprises:
determining a relationship type between the first user and the target second user;
determining the second preset control associated with the relationship type according to the relationship type.

3. The method according to Claim 2, wherein the second preset control comprises one or more of: a follow control, a comment control, and a message control.

4. The method according to Claim 3, wherein the determining the second preset control associated with the relationship type according to the relationship type comprises:
when the relationship type is a first relationship type that the first user does not follow the target second user, determining that the second preset control is the follow control for guiding the first user to follow the target second user; or
when the relationship type is a second relationship type that the first user has followed the target second user but the target second user has not followed the first user, determining that the second preset control is the comment control for guiding the first user to comment on the target second content; or
when the relationship type is a third relationship type that the first user and the second user follow each other, determining that the second preset control is the message control for guiding the first user to message the second user.

5. The method according to any one of Claims 1 to 4, wherein the method further comprises:
in response to the post confirmation operation for the first content, switching the second contents in the first state other than the target second content from the first state to the second state.

6. The method according to Claim 1, wherein the displaying the second content in the first state posted by at least one second user on the first display interface comprises:
displaying interaction information in a first preset area associated with each of the second contents in the first state.

7. The method according to Claim 5, wherein the method further comprises: displaying at least one second content in the second state on the third display interface, wherein the at least one second content in the second state comprises the target second content in the second state and the second content in the second state corresponding to at least one other second content.

8. The method according to Claim 7, wherein the displaying at least one second content in the second state on the third display interface comprises:
displaying interaction information in a second preset area associated with each of the second contents in the second state displayed on the third display interface.

9. The method according to Claim 6 or 8, wherein the interaction information comprises like information and/or comment information.

10. The method according to any one of Claims 1 to 4, wherein, when there is an associated user among the at least one second user who has a common friend with the first user, the displaying the second content in the first state posted by at least one second user on the first display interface comprises:
displaying common friend information in a third preset area associated with the second content in the first state posted by the associated user.

11. The method according to Claim 10, wherein, when there is an associated user among the at least one second user who has a common friend with the first user, the displaying at least one second content in the second state on the third display interface comprises:
displaying the common friend information in a fourth preset area associated with each of the second contents in the second state displayed on the third display interface.

12. The method according to Claim 11, wherein the common friend information comprises one or more of: profile picture information of the common friend, account name information of the common friend, and number information of the common friend.

13. An apparatus for guiding user interaction, which comprises:
a display module configured for displaying, on a first display interface, a second content in a first state posted by at least one second user and a first preset control associated with the second content in the first state, wherein the second content in the first state comprises a blurred image of the second content;
a processing module configured for responding to a trigger operation for the first preset control associated with a target second content;
the display module being further configured for displaying a second display interface for completing a generation operation of a first content, wherein the target second content is a second content posted by a target second user among the at least one second user;
the processing module being further configured for switching, in response to a post confirmation operation for the first content, the target second content in the first state to a target second content in a second state which comprises a target media content corresponding to the target second content, wherein the target media content is the target second content of without blur processing;
the display module being further configured for displaying the target second content in the second state on a third display interface; displaying a second preset control at an associated position of the target media content of the target second content, wherein the second preset control is configured for guiding the first user to interact with the second user.

14. An electronic device, comprising: a processor and a memory;
wherein the memory stores computer-executed instructions;
the processor executes the computer-executed instructions stored in the memory to cause the processor to execute the method for guiding user interaction according to any one of Claims 1 to 12.

15. A computer-readable storage medium storing thereon computer-executed instructions which, when executed by a processor, implement the method for guiding user interaction according to any one of Claims 1 to 12.

16. A computer program product, comprising a computer program which, when executed by a processor, implements the method for guiding user interaction according to any one of Claims 1 to 12.
